# EUROPEAN PATENT APPLICATION

(11) **EP 4 417 338 A1**
(43) Date of publication of application: **21.08.2024**
(21) Application number: 22942116.9
(22) Date of filing: 20.05.2022
(51) Int. Cl.: B21D 19/08, B21D 19/06, H01M 50/107, B21D 45/00, B21D 19/04

(54) **NECKING AND FLANGING ROLLER, NECKING AND FLANGING MECHANISM, AND BATTERY MANUFACTURING APPARATUS**

(71) Applicant: Contemporary Amperex Technology Co., Limited, Ningde, Fujian 352100 (CN)
(72) Inventor: PAN, Youcheng, Ningde, Fujian 352100 (CN); JIANG, Liang, Ningde, Fujian 352100 (CN); MENG, Hao, Ningde, Fujian 352100 (CN)
(74) Representative: Holt, Lucy Rose
(86) International application number: PCT/CN2022/094041
(87) International publication number: WO 2023/221076

(57) **Abstract**

Disclosed in the present application are a necking and flanging roller and a necking and flanging mechanism. The necking and flanging roller is used for forming a necking portion and a flanging portion on a housing, and comprises: a roller body, and a limiting portion arranged opposite the roller body in an axial direction of the roller body, wherein a gap is formed between the roller body and the limiting portion. The gap allows a free end of the flanging portion to be inserted into same, and limits the bending deformation. According to the technical solution provided by the present application, the quality of a battery can be improved.

## Description

### Technical Field

The present disclosure relates to the technical field of battery production, in particular to a necking-flanging roller, a necking-flanging mechanism, and a battery manufacturing device.

### Background Art

Energy conservation and emission reduction are key to the sustainable development of the automotive industry, and electric vehicles, due to their advantages in energy conservation and environment protection, have become an important component for sustainable development in the automotive industry. For electric vehicles, battery technology is a crucial factor that affects their development.

In the development of battery technology, how to improve battery quality is a pressing technical problem in battery technology.

### Summary

The present disclosure provides a necking-flanging roller, a necking-flanging mechanism, and a battery manufacturing device, which can improve the quality of batteries.

The present disclosure is realized by the following technical solutions.

In the first aspect, the present disclosure provides a necking-flanging roller, applicable for forming a necking portion and a flanging portion on a housing, comprising a roller body; and a limiting portion, arranged along the axial direction of the roller body and oppositely to the roller body, wherein a gap is formed between the roller body and the limiting portion, the free end of the flanging portion is inserted into the gap, and the gap restricts the free end from bending and deforming.

In the technical solution of the embodiments of the present disclosure, the battery cell is usually sealed using a winding sealing process. Before winding and sealing the housing of the battery cell, it is necessary to form the necking portion and the flanging portion on the housing to achieve the winding sealing. The necking-flanging roller is used to form the necking portion and the flanging portion on the housing. The roller body advances toward the housing, causing deformation of the housing in the radial direction to form the necking portion, and causing the end portion of the housing to be bent outward to form the flanging portion. As the roller body continues to advance, the free end of the flanging portion is inserted into the gap between the roller body and the limiting portion, and is constrained in the axial direction (the axial direction of the housing) of the roller body (for example, the free end of the flanging portion is perpendicular to the axial direction of the housing under the constraint of the limiting portion). The situation where the free end of the flanging portion lacks constraint, which causes its free end to lift is avoided, thereby ensuring the accuracy and quality of the flanging of the housing. Therefore, high-quality winding sealing of the housing and end cap is enabled, and thus the high quality of the battery cell and battery is ensured.

In some embodiments, the limiting portion is coaxially arranged with the roller body, and the maximum diameter of the limiting portion is smaller than the minimum diameter of the roller body.

In the technical solution of the embodiment of the present disclosure, the limiting portion is coaxially arranged with the roller body, and the maximum diameter of the limiting portion is smaller than the minimum diameter of the roller body, such that a clearance area can be formed for the flanging portion to insert into the gap, thereby avoiding interference between the limiting portion and the flanging portion.

In some embodiments, the outer peripheral surface of the limiting portion comprises a guiding slope, wherein the guiding slope is provided obliquely with respect to the central axis of the roller body. The guiding slope is configured to guide the free end to enter the gap.

By providing a guiding slope and guiding the free end of the flanging portion to gradually deform along the guiding slope to enter the gap, the technical solution of the embodiment of the present disclosure reduces the risk of the flanging portion being fractured and broken due to the concentration of stress and thus ensures the quality of the flanging.

In some embodiments, the necking-flanging roller further comprises a connecting portion, which is arranged between the roller body and the limiting portion, and connects the roller body and the limiting portion. The gap is formed as the first groove that surrounds the connecting portion.

The technical solution of the embodiment of the present disclosure involves connecting the roller body and the limiting portion through the connecting portion, resulting in a compact structure of the necking-flanging roller. At the same time, since the gap is a first groove arranged around the connecting portion, when the necking and flanging process is carried out, the necking-flanging roller rotates around the housing, and in the circumferential direction of the housing, the free end of the flanging portion can be restrained by the limiting portion, such that the flanging quality and efficiency in the circumferential direction of the housing are ensured and the quality of the battery is thus ensured.

In some embodiments, the connecting portion is coaxially arranged with the roller body.

The technical solution of the embodiment of the present disclosure involves the coaxial arrangement of the connecting portion with the roller body, resulting in a neat appearance of the necking-flanging roller, and ensuring uniform force distribution during the compression for the housing.

In some embodiments, the limiting portion, the connecting portion, and the roller body are integrally molded.

The technical solution of the embodiment of the present disclosure involves a necking-flanging roller that is of an integrally molded structure, which can, compared to a split-type structure, improve the manufacturing efficiency and structural strength of the necking-flanging roller.

In the second aspect, the present disclosure provides a necking-flanging mechanism, comprising a support member, at least partially provided inside the housing to support the housing; and the necking-flanging roller according to any of the embodiments in the first aspect, provided on the outer periphery of the support member. The necking-flanging roller is configured to cooperate with the support member to form the necking portion and flanging portion on the housing.

The technical solution of the embodiment of the present disclosure, where the support member works in conjunction with the necking-flanging roller, can improve the quality of the flanging of the housing, thereby ensuring the quality of the winding sealing process, and thus achieving high-quality battery cells and batteries.

In some embodiments, the support member comprises a first support portion and a second support portion. The first support portion and the second support portion are arranged along the axial direction of the housing and are coaxially provided. The outer diameter of the first support portion is smaller than the outer diameter of the second support portion. The first support portion is configured to extend into the housing from an opening in the housing, so as to cooperate with the necking-flanging roller to form the necking portion on the housing. The second support portion is configured to abut against the inner wall of the housing, so as to cooperate with the necking-flanging roller to form the flanging portion on the housing.

In the technical solution of the embodiment of the present disclosure, the first support portion is configured to limit the advancing distance of the roller body, and cooperate with the roller body to form the necking portion on the housing; and the second support portion is configured to limit the flanging height of the housing, and cooperate with the limiting portion to form the flanging portion on the housing and ensure the quality of the flanging.

In some embodiments, along the radial direction of the support member, the projection of the roller body on the support member is located on the outer peripheral surface of the first support portion, and the projection of the limiting portion on the support member is located on the outer peripheral surface of the second support portion.

In the technical solution of the embodiment of the present disclosure, the roller body abuts against the outer peripheral surface of the first support portion during the necking and flanging process, so as to squeeze the housing to form the necking portion on the housing. The limiting portion abuts against the second support portion with the squeezing of the roller body, thereby allowing the free end of the flanging portion to be inserted into the gap, and thus achieving constraint for the free end of the flanging portion.

In some embodiments, there are a plurality of necking-flanging rollers, and the plurality of necking-flanging rollers are spaced apart on the outer periphery of the support member.

In the technical solution of the embodiment of the present disclosure, the plurality of necking-flanging rollers are provided and spaced apart around the outer periphery of the support member, resulting in a uniform force on the housing, which improves the stability of the housing during the necking and flanging process, reduces the risk of damage to the housing, and enhances the dimensional accuracy of the flanging portion. At the same time, the plurality of necking-flanging rollers working together can improve the efficiency of the necking and flanging process for the housing, thereby enhancing the production efficiency of batteries.

In some embodiments, the necking-flanging mechanism further comprises a first-driving member, which is configured to drive the necking-flanging roller to move along the radial direction of the support member.

By providing the first-driving member, the technical solution of the embodiment of the present disclosure enables the necking-flanging roller to advance toward the housing along the radial direction of the support member, allowing for the formation of the necking portion and flanging portion on the housing.

In some embodiments, the necking-flanging mechanism further comprises a second-driving member, which is configured to drive the necking-flanging roller to rotate around the support member.

By providing the second-driving member, the technical solution of the embodiment of the present disclosure enables the necking-flanging roller to rotate around the housing, which ensures even force distribution on the housing, enhances the stability of the housing during the necking and flanging process, and improves the dimensional accuracy of the flanging portion.

In some embodiments, the necking-flanging mechanism further comprises a pallet, which is provided along the axial direction of the support member and oppositely to the support member, for supporting the housing.

By providing the pallet to support the housing, the technical solution of the embodiment of the present disclosure keeps the housing stationary under the action of the support member and the pallet, which enhances the stability of the housing during the necking and flanging process and ensures the quality of the flanging.

In some embodiments, the necking-flanging mechanism further comprises a groove roller, which is provided on the outer periphery of the support member. The groove roller is configured to roll on the housing to form the second groove. The groove roller is arranged along the circumferential direction of the support member.

In the technical solutions of the embodiments of the present disclosure, before forming the necking portion and flanging portion on the housing, the groove roller squeezes towards the housing, so as to roll on the housing to form the second groove; then, the roller body squeezes towards the second groove. Therefore, the difficulty of forming the necking portion is reduced. Additionally, compared to the approach of directly squeezing the housing to form the necking portion, by first rolling on the housing to form the second groove (along the radial direction of the support member, the projection of the second groove is not on the electrode component), and then using the roller body to press the second groove to form the necking portion, the deformation area of the housing can be reduced. Therefore, the safety of the electrode component is ensured by avoiding the compression for the electrode component inside the housing due to the excessive deformation area of the housing.

In some embodiments, the roller body is provided with a first surface that is away from the limiting portion. The plane where the first surface is located lies between two opposite surfaces of the groove roller in its axial direction.

In the technical solution of the embodiment of the present disclosure, since the plane where the first surface of the roller body is located lies between two surfaces of the groove roller that are opposite along its axial direction, the position of the deformation of the housing due to the squeezing by the roller body starts in the second groove, thus avoiding the interference between the necking portion and the electrode component, and ensuring the safety of the electrode component.

In some embodiments, the thickness of the roller body is greater than the thickness of the groove roller.

The technical solution of the embodiment of the present disclosure involves the roller body having a greater thickness than the groove roller, which allows the necking portion to be effectively formed on the housing, thereby ensuring the quality of the flanging.

In a third aspect, the present disclosure also provides a battery manufacturing device, which comprises the necking-flanging mechanism as described in any of the above embodiments. The necking-flanging mechanism is configured to form the necking portion and flanging portion on the housing of the battery.

The additional aspects and advantages of the present disclosure will be partially disclosed in the following description, and some may become evident from the following description or be understood through practical implementation of the present disclosure.

### Brief Description of Drawings

To more clearly illustrate the technical solutions of the embodiments of the present disclosure, the following will briefly introduce the accompanying drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 shows a schematic view of a necking-flanging roller and a housing in some embodiments of the present disclosure;
FIG. 2 shows a schematic view of a housing provided with a necking portion and a flanging portion in some embodiments of the present disclosure;
FIG. 3 shows a partial schematic view of a necking-flanging roller and a flanging portion in some embodiments of the present disclosure;
FIG. 4 shows a schematic view of a necking-flanging roller in some embodiments of the present disclosure;
FIG. 5 shows a three-dimensional view of a necking-flanging mechanism in some embodiments of the present disclosure;
FIG. 6 shows a top view of a necking-flanging mechanism in some embodiments of the present disclosure;
FIG. 7 shows a sectional view of FIG. 6 in the A-A direction;
FIG. 8 shows an enlarged view at part C in FIG. 7;
FIG. 9 shows a schematic view of a support member and a necking-flanging roller in some embodiments of the present disclosure;
FIG. 10 shows an enlarged view at part D in FIG. 9;
FIG. 11 shows a sectional view of FIG. 6 in the B-B direction;
FIG. 12 shows a schematic view of the housing after being rolled by the groove roller in some embodiments of the present disclosure;
FIG. 13 shows an enlarged view at part E in FIG. 12;
FIG. 14 shows a schematic view of a necking-flanging roller and a second groove in some embodiments of the present disclosure;
FIG. 15 shows a schematic diagram of the necking-flanging roller compressing the housing in some embodiments of the present disclosure; and
FIG. 16 shows a schematic view of the housing, on which the necking portion and flanging portion are formed, in some embodiments of the present disclosure.

Reference numerals: 10- necking-flanging roller; 10a- gap; 10b- first groove; 10c- clearance area; 11- roller body; 110- first surface; 12- limiting portion; 120- guiding slope; 121- flat surface; 13- connecting portion; 20-housing; 21- necking portion; 22- flanging portion; 23- second groove; 30-support member; 31- first support portion; 32- second support portion; 33-pallet; 34- groove roller.

### Detailed Description of Embodiments

The following will provide a detailed description of the embodiments of the technical solution of the present disclosure, in conjunction with the accompanying drawings. The following embodiments are provided solely for a clearer explanation of the technical solution of the present disclosure and are presented as examples, not intended to limit the protection scope of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions.

In the description of the embodiments of the present disclosure, the technical terms "first," "second," etc. are used solely for the purpose of distinguishing different objects and should not be construed as indicating or implying relative importance or suggesting a specific quantity, specific order, or hierarchical relationship of the indicated technical features. In the description of the present disclosure, "plurality" means two or more, unless otherwise expressly and specifically limited.

The term "embodiment" used herein means that specific features, structures, or characteristics described in conjunction with the embodiment can be included in at least one embodiment of the present disclosure. The use of this phrase in various parts of the description does not necessarily refer to the same embodiment, nor does it imply that these embodiments are mutually exclusive or independent of each other or are alternative embodiments. Those skilled in the art understand explicitly and implicitly that the embodiments described herein can be combined with other embodiments.

In the description of the embodiments of the present disclosure, the term "and/or" is used as a way to describe the relationship between associated objects, indicating that there can be three possible relationships. For example, "A and/or B" can represent three cases: the presence of A, the presence of both A and B, or the presence of B. Additionally, the character "/" herein generally represents an "or" relationship between the preceding and following associated objects.

In the description of the embodiments of the present disclosure, the term "plurality of" refers to two or more (including two).

In the description of the embodiments of the present disclosure, technical terms such as "center", "longitudinal", "lateral", "length", "width", "thickness", "up", "down", "front", "rear", "left", "right", "vertical", "horizontal", "top", "bottom", "inner", "outer", "clockwise", "counterclockwise", "axial", "radial", "circumferential", etc., indicating orientations or positional relationships, are based on the orientations or positional relationships shown in the drawings. These terms are used for the purpose of facilitating the description of the embodiments of the present disclosure and simplifying the description, and should not be construed as indicating or implying that the devices or components referred to must be in specific orientations or be constructed and operated in specific orientations. Therefore, they should not be understood as limiting the embodiments of the present disclosure.

In the description of the embodiments of the present disclosure, unless otherwise expressly specified and limited, technical terms such as "provide", "connect", "communicate", "fix", and similar terms should be broadly interpreted. For example, they can refer to fixed connections, detachable connections, or integral connections. They can also involve mechanical connections or electrical connections. Connections can be direct or indirect through intermediate media. Furthermore, the terms may refer to internal connections within two components or the interaction between two components. Those of ordinary skill in the art can understand the specific meanings of the above terms in the present disclosure according to specific situations.

In the present disclosure, the battery cell can comprise various types of batteries such as lithium-ion secondary batteries, lithium-ion primary batteries, lithium-sulfur batteries, sodium lithium-ion batteries, sodium-ion batteries, magnesium-ion batteries, etc., which is not limited by the embodiments of the present disclosure.

The battery cell comprises a housing, an end cap, an electrode component, and an electrolyte. The electrode component and electrolyte are contained within the housing, and the end cap is used to seal the opening of the housing. The connection between the end cap and the housing can be achieved through either welding or winding sealing. Winding sealing, as an efficient and rapid sealing method, is increasingly being used in the production and manufacturing of cylindrical battery cells.

The electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer is used as the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer is used as the negative electrode tab. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together. The material of the separator can be PP (polypropylene) or PE (polyethylene), etc.

The batteries mentioned in the embodiments of the present disclosure refer to a single physical module that comprises one or more battery cells to provide higher voltage and capacity. For example, the batteries mentioned in the present disclosure can comprise battery modules or battery packs, and so on.

Currently, from the perspective of market trends, electric vehicles have become an important component for sustainable development in the automotive industry. Batteries provide energy for the travel of the vehicles and the operation of various electrical components within the vehicle. For electric vehicles, battery technology is a crucial factor that affects their development. In the development of battery technology, how to improve battery quality is a pressing technical issue in battery technology.

As mentioned above, for cylindrical battery cells, using the winding sealing method for sealing the housing can significantly improve the production efficiency of the battery cell. However, using the winding sealing method for sealing the battery cells can lead to issues such as poor quality and low yield rate. The inventors have found that this is because before the winding sealing process, it is necessary to perform necking and flanging, that is, to form the necking portion and flanging portion at one end of the housing near the opening. However, in the existing technology, during the necking and flanging process for the housing of the battery cell, the free end of the flanging portion is not properly constrained, which can lead to the free end of the flanging portion to curl up. As a result, the end cap of the battery cell is not able to effectively adhere to the flanging portion, leading to poor winding sealing quality and impacting the quality of the battery cell.

Based on the above considerations and to avoid the curling up of the free end of the flanging portion, ensure flanging precision, and improve the quality of the battery cell, the inventor, after in-depth research, has designed a limiting portion on the necking-flanging roller to restrict the bending deformation of the free end of the flanging portion, thereby preventing the curling up of the free end of the flanging portion.

The necking-flanging roller is used to form the necking portion and the flanging portion on the housing. As an embodiment, the housing remains stationary, and the necking-flanging roller advances towards the housing along the radial direction of the housing while the necking-flanging roller rotates around the housing, so as to form the necking portion on the housing. Simultaneously, the open end of the housing is bent outward to form the flanging portion. As the necking-flanging roller advances continuously, the free end of the flanging portion is constrained by the limiting portion, thereby preventing the free end from curling up, which ensures the precision and quality of the flanging of the housing, and allows the end cap to securely adhere to the flanging portion to ensure the subsequent winding sealing quality. As a result, the battery cell attains a better quality.

The necking-flanging roller disclosed in the embodiments of the present disclosure comprises, but is not limited to, forming the necking portion and the flanging portion on the housing of cylindrical battery cells, beverage cans, or various other containers.

The necking-flanging roller is a component of the necking-flanging mechanism, wherein the necking-flanging mechanism refers to the device that processes the housing and forms the necking portion and flanging portion on the housing to enable winding sealing. For example, the necking-flanging mechanism further comprises a first-driving member and a second-driving member. The first-driving member is used to drive the necking-flanging roller to advance toward the housing. The second-driving member is used to drive the necking-flanging roller to rotate around the housing, so as to form the necking portion and flanging portion on the housing.

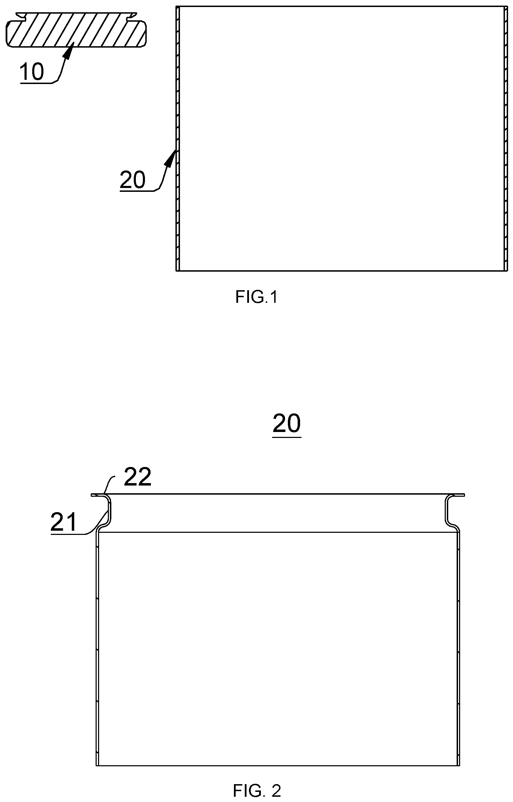

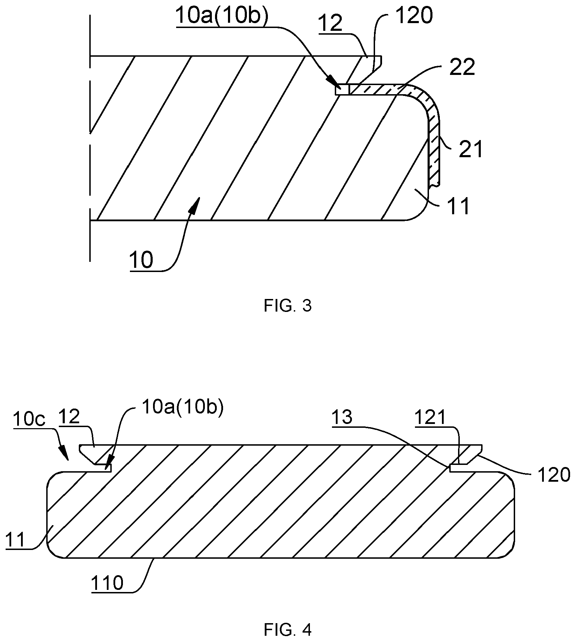

In some embodiments of the present disclosure, referring to FIGS. 1 to 4, FIG. 1 illustrates a schematic view of the necking-flanging roller 10 and the housing 20 in some embodiments of the present disclosure; FIG. 2 illustrates a schematic view of the housing 20 provided with necking portion 21 and flanging portion 22 in some embodiments of the present disclosure; FIG. 3 shows a partial schematic view of the necking-flanging roller 10 and the flanging portion 22 in some embodiments of the present disclosure; and FIG. 4 illustrates a schematic view of the necking-flanging roller 10 in some embodiments of the present disclosure.

The necking-flanging roller 10 is used to form the necking portion 21 and the flanging portion 22 on the housing 20, which comprises a roller body 11 and a limiting portion 12. The limiting portion 12 is arranged along the axial direction of the roller body 11 and oppositely to the roller body 11. A gap 10a is formed between the roller body 11 and the limiting portion 12, and the gap 10a is provided for the free end of the flanging portion 22 to insert therein and restricts the free end from bending and deforming.

The necking portion 21 is the area of the housing 20 that undergoes radial contraction due to the compression and deformation by the necking-flanging roller 10. While forming the necking portion 21, the open end of the housing 20 is bent outward to form the flanging portion 22. The flanging portion 22 is used to be wound together with the edge portion of the end cap (not shown) to achieve winding sealing. The free end of the flanging portion 22 refers to the end of the flanging portion 22 that is away from the necking portion 21.

The roller body 11 is the main body part of the necking-flanging roller 10. When the necking-flanging roller 10 advances along the radial direction of the housing 20, the outer peripheral surface of the roller body 11 comes into contact with the housing 20 and squeezes the housing 20, thereby causing radial deformation of the housing 20 to form the necking portion 21.

The limiting portion 12 is the portion of the necking-flanging roller 10 that restricts the free end of the flanging portion 22 from curling up.

The gap 10a is the part of the necking-flanging roller 10 where the free end of the flanging portion 22 can be inserted. After the free end of the flanging portion 22 is inserted into the gap 10a, it is constrained by the limiting portion 12 to prevent the flanging portion 22 from curling up.

By providing the limiting portion 12 along the axial direction of the roller body 11 and opposite to the roller body 11, and forming a gap 10a between the roller body 11 and the limiting portion 12, the free end of the flanging portion 22 can be inserted into the gap 10a when the roller body 11 squeezes the housing 20.

Moreover, the free end of the flanging portion 22 can be constrained by the limiting portion 12 when the roller body 11 squeezes the housing 20, so as to prevent the free end of the flanging portion 22 from curling up, thereby ensuring the quality of subsequent winding sealing and thus the quality of the battery cell.

According to some embodiments of the present disclosure, as shown in FIG. 4, the limiting portion 12 is coaxially provided with the roller body 11, and the maximum diameter of the limiting portion 12 is smaller than the minimum diameter of the roller body 11.

The limiting portion 12 and the roller body 11 are both in rotating structure, and their central axis lines coincide with each other. The necking-flanging roller 10 rotates around the housing 20 and advances along the radial direction of the housing 20, thereby efficiently forming the necking portion 21 and flanging portion 22 on the housing 20.

The maximum diameter of the limiting portion 12 is smaller than the minimum diameter of the roller body 11, which means that along the radial direction of the necking-flanging roller 10, the maximum size of the limiting portion 12 is smaller than the minimum size of the roller body 11, such that a clearance area 10c is created between the limiting portion 12 and the roller body 11, wherein the clearance area 10c allows the free end of the flanging portion 22 to insert into the gap 10a without interference from the limiting portion 12.

The limiting portion 12 is coaxially arranged with the roller body 11, and the maximum diameter of the limiting portion 12 is smaller than the minimum diameter of the roller body 11. On the one hand, a clearance area 10c can be formed for the insertion of the flanging portion 22 into the gap 10a, thereby avoiding interference between the limiting portion 12 and the flanging portion 22. On the other hand, the limiting portion 12 and the roller body 11 can move synchronously. By pressing against the housing 20, the necking portion 21 and the flanging portion 22 can be formed effectively on the housing 20.

According to some embodiments of the present disclosure, as shown in FIGS. 3 and 4, the outer peripheral surface of the limiting portion 12 comprises a guiding slope 120, wherein the guiding slope 120 is provided obliquely with respect to the central axis of the roller body 11. The guiding slope 120 is used to guide the free end to enter the gap 10a.

The guiding slope 120 can be a part of the outer peripheral surface of the limiting portion 12 and is inclined relative to the center axis of the roller body 11. When the housing 20 undergoes deformation due to the pressing by the necking-flanging roller 10, the guiding slope 120 guides the gradual deformation and bending of the free end of the flanging portion 22 to enter the gap 10a.

As shown in FIGS. 3 and 4, a surface of the limiting portion 12 facing the roller body 11 is a flat surface 121, and the flat surface 121 is in a plane perpendicular to the center axis of the roller body 11 (i.e., perpendicular to the axis of the housing 20). When the flanging portion 22 is formed by squeezing the housing 20, the free end of the flanging portion 22 will first gradually deform along the guiding slope 120, and eventually, the free end of the flanging portion 22 will be constrained by the flat surface 121 to be perpendicular to the center axis of the roller body 11.

By providing the guiding slope 120, the free end of the flanging portion 22 is guided to gradually deform along the guiding slope 120 to enter the gap 10a. Compared to the approach where the free end of the flanging portion 22 is not guided and directly inserted into the gap 10a, this design can reduce the risk of fracture and damage of the flanging portion 22 due to stress concentration, thereby ensuring the quality of flanging.

According to some embodiments of the present disclosure, such as FIG. 4, the necking-flanging roller 10 further comprises a connecting portion 13, wherein the connecting portion 13 is arranged between the roller body 11 and the limiting portion 12 and connects the roller body 11 and the limiting portion 12. The gap 10a is formed as a first groove 10b that surrounds the connecting portion 13.

Referring to FIG. 4, the connecting portion 13 is located between the roller body 11 and the limiting portion 12, and connects the roller body 11 and the limiting portion 12. By means of the connection provided by connecting portion 13, the necking-flanging roller 10 becomes an integral structure.

The roller body 11 and the limiting portion 12 are connected to each other through connecting portion 13, resulting in a compact structure for the necking-flanging roller 10 with low space occupancy. At the same time, since the gap 10a is a first groove 10b arranged around the connecting portion 13, when the necking and flanging process is carried out, the necking-flanging roller 10 rotates around the housing 20, and in the circumferential direction of the housing 20, any position of the free end of the flanging portion 22 can be restrained by the limiting portion 12, such that the flanging quality and efficiency of the housing 20 is ensured, resulting in higher quality of the battery cell.

In some other embodiments, the necking-flanging roller 10 can be a split-type structure. For example, the roller body 11 and the limiting portion 12 are separate components. The limiting portion 12 is spaced apart from the roller body 11 along the axial direction of the roller body 11. When the roller body 11 advances towards the housing 20, the free end of the flanging portion 22 can also insert into the gap 10a and be constrained by the limiting portion 12. In some other embodiments, the connecting portion 13 is able to not be located between the roller body 11 and the limiting portion 12. Instead, the connecting portion 13 can be in the form of a "C" shaped bracket, with one end mounted to the surface of the limiting portion 12 facing away from the roller body 11, and the other end mounted to the surface of the roller body 11 facing away from the limiting portion 12.

According to some embodiments of the present disclosure, the connecting portion 13 is coaxially provided with the roller body 11.

The connecting portion 13 and the roller body 11 are both of rotating structure, and their central axis lines coincide with each other.

The coaxial arrangement of the connecting portion 13 with the roller body 11 results in a neat appearance of the necking-flanging roller 10 and ensures uniform force distribution during the compression of the housing 20.

In some embodiments, the maximum diameter of the connecting portion 13 is smaller than the minimum diameter of the limiting portion 12, which means that along the radial direction of the necking-flanging roller 10, the minimum size of the limiting portion 12 is larger than the maximum size of the connecting portion 13, so as to allows the limiting portion 12 to constrain the free end of the flanging portion 22, thereby preventing the free end of the flanging portion 22 from curling up.

The connecting portion 13 is coaxially provided with the roller body 11 and the maximum diameter of the connecting portion 13 is smaller than the minimum diameter of the limiting portion 12, which ensures that the limiting portion 12 effectively constrains the free end of the flanging portion 22, thereby preventing the free end of the flanging portion 22 from curling up. Therefore, the quality of the winding sealing process is ensured, and, consequently, the quality of the battery cell is ensured.

According to some embodiments of the present disclosure, the limiting portion 12, the connecting portion 13, and the roller body 11 are integrally molded.

The necking-flanging roller 10 can be integrally molded through techniques such as casting, milling, 3D printing, etc.

The technical solution of the embodiment of the present disclosure involves a necking-flanging roller 10 that is of an integrally molded structure, which can, compared to a split-type structure, improve the manufacturing efficiency and structural strength of the necking-flanging roller 10.

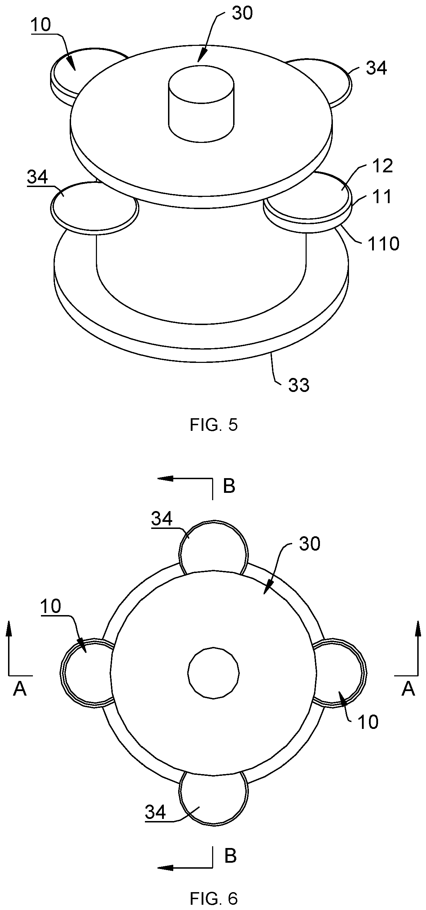

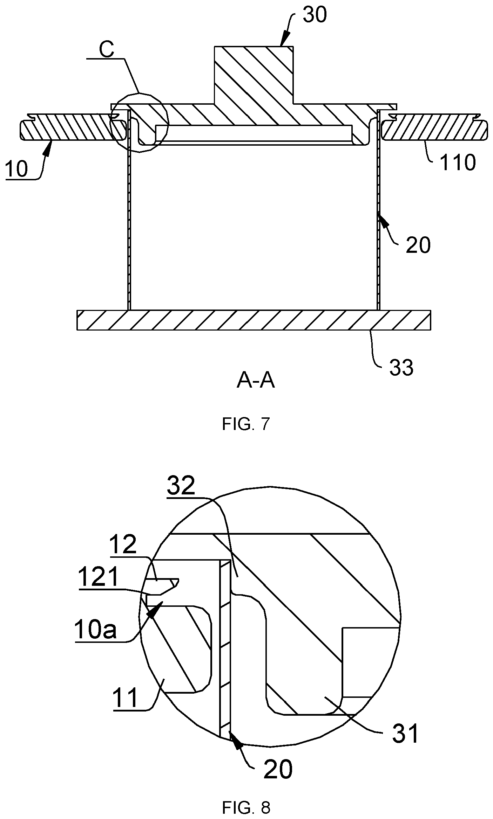

Based on some embodiments of the present disclosure, referring to FIGS. 5 to 7, FIG. 5 shows a perspective view of the necking-flanging mechanism in some embodiments of the present disclosure. FIG. 6 shows a top view of the necking-flanging mechanism in some embodiments of the present disclosure. FIG. 7 shows a sectional view of FIG. 6 in the A-A direction. The present disclosure further provides a necking-flanging mechanism, comprising a support member 30 and a necking-flanging roller 10. The support member 30 is at least partially provided inside the housing 20 to support the housing 20. The necking-flanging roller 10 is provided on the outer periphery of the support member 30. The necking-flanging roller 10 is used in conjunction with the support member 30 to form the necking portion 21 and the flanging portion 22 on the housing 20.

The housing 20 is provided with an opening, and at least a portion of the support member 30 extends into the housing 20 from the opening to provide support for the housing 20 and prevent displacement of the housing 20.

When at least a portion of the support member 30 is provided inside the housing 20, the necking-flanging roller 10 can advance along the radial direction of the support member 30, so as to compress the wall of the housing 20, and cause the wall of the housing 20 to deform and abut against the support member 30. As a result, the necking portion 21 and flanging portion 22 are formed on the housing 20.

The technical solution of the embodiment of the present disclosure, where the support member 30 works in conjunction with the necking-flanging roller 10, can improve the quality of the flanging of the housing 20, thereby ensuring the quality of the subsequent winding sealing process, and thus achieving high-quality battery cells.

According to some embodiments of the present disclosure, as shown in FIG. 8, FIG. 8 shows an enlarged view at part C in FIG. 7. The support member 30 comprises a first support portion 31 and a second support portion 32. The first support portion 31 and the second support portion 32 are arranged along the axial direction of the housing 20 and are coaxially provided. The outer diameter of the first support portion 31 is smaller than the outer diameter of the second support portion 32. The first support portion 31 is configured to extend into the housing 20 from an opening in the housing 20, and cooperate with the necking-flanging roller 10 to form the necking portion 21 on the housing 20. The second support portion 32 is configured to abut against the inner wall of the housing 20, and cooperate with the necking-flanging roller 10 to form the flanging portion 22 on the housing 20.

The first support portion 31 and the second support portion 32 are both of rotating structure, and they are coaxially arranged and positioned along the circumferential direction of the housing 20. The outer diameter of the first support portion 31 is smaller than the outer diameter of the second support portion 32. The first support portion 31 and the second support portion 32 extend into the housing 20. The distance between the first support portion 31 and the interior of the housing 20 is the advancing distance of the necking-flanging roller 10. When the necking-flanging roller 10 presses the wall surface of the housing 20, the wall surface of the housing 20 abuts against the first support portion 31. The second support member 32 abuts against the inner wall of the housing 20, so that when the necking-flanging roller 10 presses the wall surface of the housing 20 and causes the housing 20 to deform, the inner wall of the housing 20 can deform and bend along the recessed area between the second support portion 32 and the first support portion 31, thereby forming the flanging portion 22 on the housing 20.

The first support portion 31 has a smaller outer diameter compared to the second support portion 32, which is used to limit the advancing distance of the roller body 11 and cooperate with the roller body 11 to form the necking portion 21 on the housing 20. The outer diameter of the second support portion 32 is larger than that of the first support portion 31. Before the necking and flanging process, the second support portion 32 can abut against the opening end of the housing 20. When the necking-flanging roller 10 advances toward the housing 20 and forms the flanging portion 21 on the housing 20, the second support portion 32 can be attached to the inner wall of the flanging portion 21 to limit the flanging height of the housing 20 and ensure the quality of the flanging.

In some embodiments, to ensure the forming quality of the flanging portion 22 and reduce the risk of damage to the flanging portion 22, there is a smooth transition between the first support portion 31 and the second support portion 32.

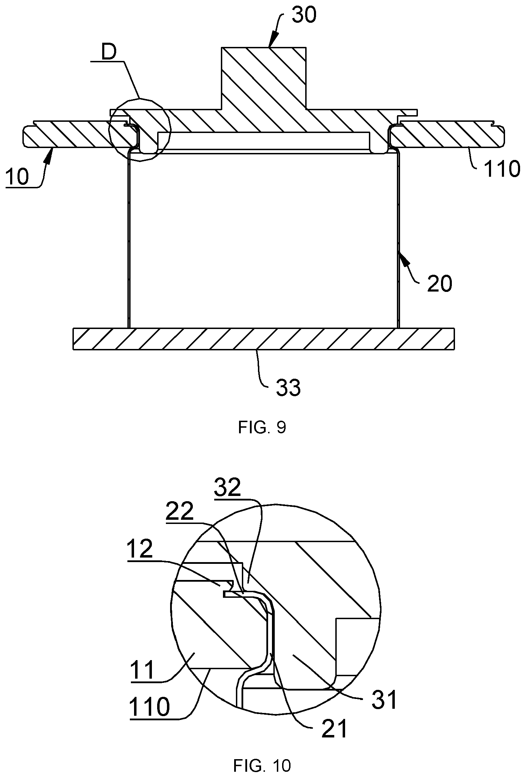

According to some embodiments in the present disclosure, as shown in FIGS. 8 to 10, FIG. 9 shows a schematic diagram of the support member 30 and the necking-flanging roller 10 in some embodiments of the present disclosure. FIG. 10 shows an enlarged view at part D in FIG. 9. Along the radial direction of the support member 30, the projection of the roller body 11 on the support member 30 is located on the outer peripheral surface of the first support portion 31, and the projection of the limiting portion 12 on the support member 30 is located on the outer peripheral surface of the second support portion 32.

The projection of the roller body 11 on the support member 30 is located on the outer peripheral surface of the first support portion 31, which means that when the necking-flanging roller 10 advances along the radial direction of the support member 30, the roller body 11 presses the wall surface of the housing 20 against the outer peripheral surface of the first support portion 31, thereby forming the necking portion 21. The projection of the limiting portion 12 on the support member 30 is located on the outer peripheral surface of the second support portion 32, which means that when the necking-flanging roller 10 advances along the radial direction of the support member 30, the limiting portion 12 cooperates with the second support portion 32 to restrict the deformation position of the free end of the flanging portion 22, thereby ensuring the quality of the flanging. Optionally, the surface of the limiting portion 12 facing the roller body 11 and the surface of the second support portion 32 facing the first support portion 31 can be in the same plane, thus effectively ensuring the quality of the flanging.

In the technical solution of the embodiment of the present disclosure, the roller body 11 abuts against the outer peripheral surface of the first support portion 30 during the necking and flanging process, so as to squeeze the housing 20 to form the necking portion 21 on the housing 20. The limiting portion 12 abuts against the second support portion 32 as the advance of the roller body 11, so as to allow the free end of the flanging portion 22 to be inserted into the gap 10a, thus achieving constraint for the free end of the flanging portion 22.

According to some embodiments of the present disclosure, shown in FIGS. 5 and 7, there are a plurality of necking-flanging rollers 10, and the plurality of necking-flanging rollers 10 are spaced apart on the outer periphery of the support member 30.

Along the circumferential direction of the support member 30, the plurality of necking-flanging rollers 10 are arranged at intervals and can simultaneously advance along the radial direction of the support member 30, while the plurality of necking-flanging rollers 10 are all rotatable along the support member 30 (the housing 20). Referring to FIG. 5, two necking-flanging rollers 10 are provided, and the two necking-flanging rollers 10 are symmetrically distributed along the center axis of the support member 30.

Through providing the plurality of necking-flanging rollers 10 and making the plurality of necking-flanging rollers 10 spaced apart around the outer periphery of the support member 30, the technical solution of the embodiment of the present disclosure can result in even force distribution on the housing 20, which improves the stability of the housing 20 during the necking and flanging process, reduces the risk of housing 20 being damaged, and enhances the dimensional accuracy of the flanging portion 22. At the same time, the plurality of necking-flanging rollers 10 working together can improve the efficiency of the necking and flanging process of the housing 20, thereby enhancing the production efficiency of batteries.

In other embodiments, the number of necking-flanging roller 10 in the necking-flanging mechanism can also be one.

According to some embodiments of the present disclosure, the necking-flanging mechanism further comprises a first-driving member (not shown in the figures), wherein the first-driving member is configured to drive the necking-flanging roller 10 to move along the radial direction of the support member 30.

The first-driving member is a component capable of outputting a linear motion to realize radial movement of the necking-flanging roller 10 along the support member 30. Since the solution of radial advance of the roller to the housing 20 through the first-driving member is a conventional solution in the necking and flanging process, the present embodiment does not elaborate on the first-driving member, and exemplarily, the first-driving member comprises, but is not limited to, a linear actuator, a single-axis manipulator, a cylinder, and other devices capable of outputting linear motion.

By providing the first-driving member, the technical solution of the embodiment of the present disclosure enables the necking-flanging roller 10 to advance toward the housing 20 along the radial direction of the support member 30, so as to form the necking portion 21 and flanging portion 22 on the housing 20.

According to some embodiments of the present disclosure, the necking-flanging mechanism further comprises a second-driving member (not shown in the figures), wherein the second-driving member is configured to drive the necking-flanging roller 10 to rotate around the support member 30.

The second-driving member is a component capable of outputting a circumferential motion to realize circumferential movement of the necking-flanging roller 10 along the support member 30 to realize rotating around the housing 20. Since the solution of the circumferential movement of the roller along the housing 20 by the second-driving member is a conventional solution in the necking and flanging process, the present embodiment does not elaborate on the second-driving member.

By providing the second-driving member, the technical solution of the embodiment of the present disclosure enables the necking-flanging roller 10 to rotate around the housing 20, which ensures even force distribution on the housing 20, enhances the stability of the housing 20 during the necking and flanging process, and improves the dimensional accuracy of the flanging portion 22.

According to some embodiments of the present disclosure, referring to FIG. 5, the necking-flanging mechanism further comprises a pallet 33, wherein the pallet 33 is arranged along the axial direction of the support member 30 and oppositely the support member 30 for supporting the housing 20.

The pallet 33 is a component that is disposed oppositely the support member 30 along the axial direction of the support member 30 and supports the housing 20, and by cooperating with the support member 30, it is possible to keep the housing 20 stationary and prevent the housing 20 from being displaced. In some embodiments, the pallet 33 is configured to be able to support the housing 20 at all times to avoid the situation that the housing 20 is displaced along its axial direction as a result of squeezing and deformation. For example, the pallet 33 is held against the support member 30 by a pressing mechanism along the axial direction of the support member 30, thereby ensuring that the housing 20 remains in a stationary state.

By providing the pallet 33 to support the housing 20, the technical solution of the embodiment of the present disclosure keeps the housing 20 stationary under the action of the support member 30 and the pallet 33, which enhances the stability of the housing 20 during the necking and flanging process and ensures the quality of the flanging.

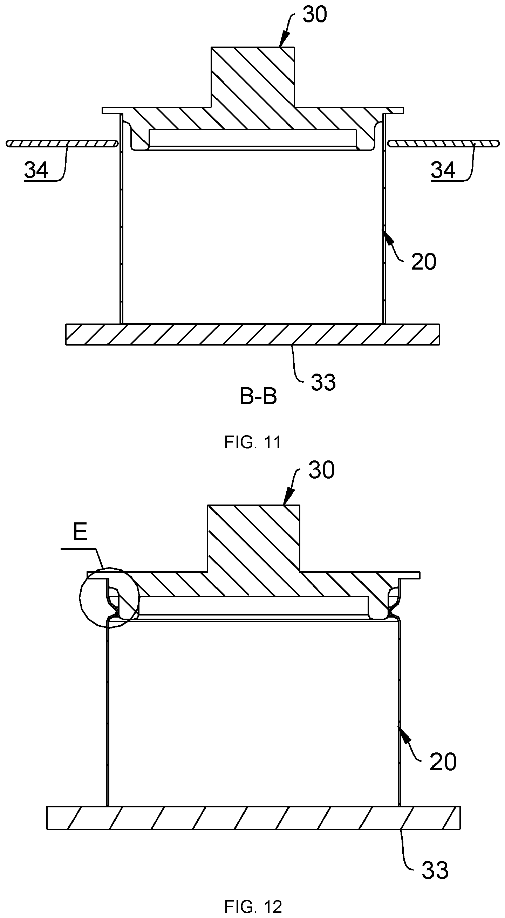

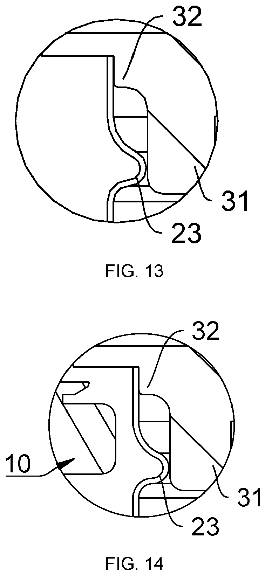

According to some embodiments of the present disclosure, referring to FIG. 5, and FIG. 11-FIG. 13, FIG. 11 shows a sectional view in the B-B direction in FIG. 6, FIG. 12 shows a schematic view of the housing 20 after being rolled by the groove roller 34 in some embodiments of the present disclosure, and FIG. 13 shows an enlarged view at part E in FIG. 12. The necking-flanging mechanism further comprises a groove roller 34, wherein the groove roller 34 is provided on the outer periphery of the support member 30. The groove roller 34 is configured to roll on the housing 20 to form the second groove 23. The groove roller 34 is arranged along the circumferential direction of the support member 30.

The outer peripheral contour of the groove roller 34 is arc-shaped, and rolls on the housing 20 to form the second groove 23 by advancing toward the housing 20. The second groove is a part of the housing 20 that is formed prior to forming the necking portion 21, and the second groove 23 is arranged in a ring shape around the housing 20.

In the technical solutions of the embodiments of the present disclosure, before forming the necking portion 21 and flanging portion 22 on the housing 20, the groove roller 34 advances towards the housing 20, so as to roll on the housing 20 to form the second groove 23; then, the roller body 11 advances towards the second groove 23. Therefore, the difficulty of forming the necking portion 21 is reduced. Additionally, compared to the approach of directly advancing towards the housing 20 to form the necking portion 21, by first rolling on the housing 20 to form the second groove (along the radial direction of the support member 30, the projection of the second groove 23 is not on the electrode component (not shown in the drawings)), and then using the roller body 11 to roll the second groove 23 to form the necking portion 21, the deformation area of the housing 20 can be reduced, so as to prevent the mutual interference with the electrode component inside the housing 20 due to an excessively large deformation region of the housing 20, thereby ensuring the safety of the electrode component.

According to some embodiments of the present disclosure, in conjunction with FIG. 5, the roller body 11 is provided with a first surface 110 that is away from the limiting portion 12. The plane where the first surface 110 is located lies between two surfaces of the groove roller 34 that are opposite along its axial direction.

The plane where the first surface 110 is located lies between two surfaces of the groove roller 34 that are opposite along its axial direction, which means that, along the radial direction of the support member 30, at least a part of the projection of the roller body 11 overlaps with the projection of the groove roller 34.

In the technical solution of the embodiment of the present disclosure, since the plane where the first surface 110 of the roller body 11 is located lies between two surfaces of the groove roller 34 that are opposite along its axial direction, the position of the deformation of the housing 20 due to the squeezing by the roller body 11 starts in the second groove 23, thus avoiding the interference between the necking portion 21 and the electrode component, and ensuring the safety of the electrode component. The position of the deformation of the housing 20 due to the squeezing by the roller body 11 starts in the second groove 23, which means that the end, away from the flanging portion 22, of the position where the housing 20 deforms due to the squeezing by the roller body 11 is confined within the second groove 23 to prevent the deformation of the housing 20 from interfering with the electrode component (not shown in the drawings) within the housing 20.

According to some embodiments of the present disclosure, the thickness of the roller body 11 is greater than the thickness of the groove roller 34.

The thickness of the roller body 11 refers to the dimension of the roller body 11 in its axial direction, and the dimension of the necking portion 21 in the axial direction of the housing 20 corresponds to the thickness of the roller body 11 when the roller body 11 advances towards the housing 20 to form the necking portion 21.

The thickness of the grooved roller 34 refers to the dimension of the groove roller 34 in its axial direction, and when the groove roller 34 rolls the housing 20 to form the second groove 23, the dimension of the second groove 23 in the axial direction of the housing 20 corresponds to the thickness of the groove roller 34.

The technical solution of the embodiment of the present disclosure involves the roller body 11 having a greater thickness than the groove roller 34, which allows the necking portion 21 to be effectively formed on the housing 20, thereby ensuring the quality of the flanging.

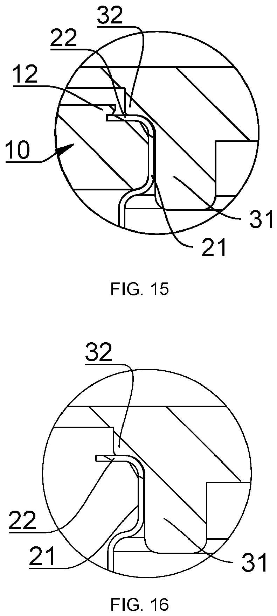

Referring to FIGS. 11 to 16, FIG. 14 shows a schematic diagram of the necking-flanging roller 10 and the second groove 23 in some embodiments of the present disclosure. FIG. 15 shows the schematic diagram of the necking-flanging roller 10 squeezing the housing 20 in some embodiments of the present disclosure. FIG. 16 shows a schematic diagram of the housing 20, on which the necking portion 21 and the flanging portion 22 have been formed, in some embodiments of the present disclosure. The operation process of the necking-flanging mechanism can be described as follows.

As shown in FIG. 11, the housing 20 is placed between the support member 30 and the pallet 33 to keep the housing 20 stationary. The first support portion 31 and the second support portion 32 of the support member 30 extend into the interior of the housing 20, and the inner wall of the housing 20 abuts against the outer peripheral surface of the second support portion 32.

As shown in FIG. 11 to FIG. 13, the groove roller 34 is in operation, which rotates around the housing 20, moves along the radial direction of the housing 20 and squeezes the wall of the housing 20, so as to roll on the housing 20 to form the second groove 23. Afterward, the groove roller 34 is removed.

As shown in FIG. 14 to FIG. 16, the necking-flanging roller 10 is in operation, which rotates around the housing 20 and moves along the radial direction of the housing 20 to squeeze the wall of the housing 20. Based on the second groove 23, the necking portion 21 and the flanging portion 22 are formed on the wall of the housing 20. The flanging portion 22 is constrained by the limiting portion 12, which is perpendicular to the central axis of the housing 20, so as to obtain a high-quality flanging.

According to some embodiments of the present disclosure, the present disclosure also provides a battery manufacturing device, wherein the battery manufacturing device comprises the necking-flanging mechanism as described in the above embodiments. The necking-flanging mechanism is used to form the necking portion 21 and flanging portion 22 on the housing 20.

According to some embodiments of the present disclosure, as shown in FIGS. 1 to 4, a necking-flanging roller 10 is provided in the present disclosure, wherein the necking-flanging roller 10 is configured to advance along the radial direction of the housing 20 to form the necking portion 21 and the flanging portion 22 on the housing 20. The necking-flanging roller 10 comprises a roller body 11, a limiting portion 12, and a connecting portion 13. Along the axial direction of the roller body 11, the roller body 11, the connecting portion 13, and the limiting portion 12 are connected in sequence and arranged coaxially. The maximum diameter of the connecting portion 13 is smaller than the minimum diameter of the limiting portion 12, and the maximum diameter of the limiting portion 12 is smaller than the minimum diameter of the roller body 11. The roller body 11 and the limiting portion 12 form a gap 10a therebetween, and the gap 10a is a first groove 10b that is arranged around the connecting portion 13.

A surface of the limiting portion 12 facing the roller body 11 is a flat surface 121, and the flat surface 121 is perpendicular to the center axis of the roller body 11. The outer peripheral surface of the limiting portion 12 includes a guiding slope 120, wherein the guiding slope 120 is connected to a flat surface 121. The guiding slope 120 is inclined relative to the central axis of the roller body 11. The guiding slope 120 is configured to guide the free end of the flanging portion 22 to enter the first groove 10b and to be constrained by the flat surface 121 to be perpendicular to the central axis of the housing 20.

The above is only a preferred embodiment of the present disclosure, which is not intended to limit it, and the present disclosure may have various changes and variations for those skilled in the art. Any modification, equivalent substitution, improvement, etc. made within the spirit and principles of the present disclosure shall be included in the scope of protection of the present disclosure.

## Claims

1. A necking-flanging roller, applicable to form a necking portion and a flanging portion on a housing, wherein the necking-flanging roller comprises:
a roller body; and
a limiting portion, arranged along an axial direction of the roller body and oppositely to the roller body, wherein
a gap is formed between the roller body and the limiting portion, and an free end of the flanging portion is inserted into the gap and the gap restricts the free end from bending and deforming.

2. The necking-flanging roller according to claim 1, wherein
the limiting portion is coaxially arranged with the roller body, and a maximum diameter of the limiting portion is smaller than a minimum diameter of the roller body.

3. The necking-flanging roller according to claim 1 or 2, wherein
an outer peripheral surface of the limiting portion comprises a guiding slope, the guiding slope is arranged obliquely with respect to a central axis of the roller body, and the guiding slope is configured to guide the free end to enter the gap.

4. The necking-flanging roller according to any one of claims 1 to 3, wherein
the necking-flanging roller further comprises:
a connecting portion, arranged between the roller body and the limiting portion and connecting the roller body and the limiting portion, wherein
the gap is a first groove that is arranged around the connecting portion.

5. The necking-flanging roller according to claim 4, wherein
the connecting portion is coaxially arranged with the roller body.

6. The necking-flanging roller according to claim 4 or 5, wherein
the limiting portion, the connecting portion, and the roller body are integrally molded.

7. A necking-flanging mechanism, comprising:
a support member, at least partially provided inside a housing to support the housing; and
the necking-flanging roller according to any one of claims 1 to 6, provided on an outer periphery of the support member, wherein the necking-flanging roller is configured to cooperate with the support member to form the necking portion and the flanging portion on the housing.

8. The necking-flanging mechanism according to claim 7, wherein
the support member comprises a first support portion and a second support portion, wherein the first support portion and the second support portion are arranged along an axial direction of the housing and are coaxially provided; and an outer diameter of the first support portion is smaller than an outer diameter of the second support portion; and
the first support portion is configured to extend into the housing from an opening of the housing, and cooperate with the necking-flanging roller to form the necking portion on the housing; and the second support portion is configured to abut against an inner wall of the housing, and cooperate with the necking-flanging roller to form the flanging portion on the housing.

9. The necking-flanging mechanism according to claim 8, wherein
along a radial direction of the support member, a projection of the roller body on the support member is located on an outer peripheral surface of the first support portion, and a projection of the limiting portion on the support member is located on an outer peripheral surface of the second support portion.

10. The necking-flanging mechanism according to any one of claims 7 to 9, wherein
a plurality of necking-flanging rollers are provided, and the plurality of necking-flanging rollers are spaced apart on an outer periphery of the support member.

11. The necking-flanging mechanism according to any one of claims 7 to 10, wherein the necking-flanging mechanism further comprises:
a first-driving member, configured to drive the necking-flanging roller to move along a radial direction of the support member.

12. The necking-flanging mechanism according to any one of claims 7 to 11, wherein the necking-flanging mechanism further comprises:
a second-driving member, configured to drive the necking-flanging roller to rotate around the support member.

13. The necking-flanging mechanism according to any one of claims 7 to 12, wherein
the necking-flanging mechanism further comprises:
a pallet, provided along an axial direction of the support member and oppositely to the support member and configured to support the housing.

14. The necking-flanging mechanism according to any one of claims 7 to 13, wherein
the necking-flanging mechanism further comprises:
a groove roller, provided on the outer periphery of the support member, wherein the groove roller is configured to roll on the housing to form a second groove; and the groove roller is arranged along a circumferential direction of the support member.

15. The necking-flanging mechanism according to claim 14, wherein the roller body is provided with a first surface that is away from the limiting portion; and a plane where the first surface is located is located between two surfaces of the groove roller that are opposite along an axial direction of the groove roller.

16. The necking-flanging mechanism according to claim 14 or 15, wherein a thickness of the roller body is greater than a thickness of the groove roller.

17. A battery manufacturing device, comprising the necking-flanging mechanism according to any one of claims 7 to 16, wherein the necking-flanging mechanism is configured to form the necking portion and the flanging portion on the housing.
